# EUROPÄISCHE PATENTSCHRIFT

(11) **EP 0 495 400 B1**
(45) Veröffentlichungstag und Bekanntmachung des Hinweises auf die Patenterteilung: **18.12.1996**
(21) Anmeldenummer: 92100295.2
(22) Anmeldetag: 09.01.1992
(51) Int. Cl.: G02B 6/44

(54) **Optisches Kabel und Verfahren zu dessen Herstellung**
Optical cable and method of its production
Câble optique et procédé de sa fabrication

(30) Priorität: 17.01.1991 DE 4101271
(43) Veröffentlichungstag der Anmeldung: 22.07.1992
(73) Patentinhaber: SIEMENS AKTIENGESELLSCHAFT, 80333 München (DE)
(72) Erfinder: Oestreich, Ulrich, Dipl.-Ing., D-8000 München 71 (DE); Schneider, Reiner, Dipl.-Ing., D-8624 Ebersdorf (DE)

(56) Entgegenhaltungen:
- DE-A- 2 928 678
- DE-A- 3 839 109
- GB-A- 2 184 563
- GB-A- 2 230 355

## Beschreibung

Die Erfindung betrifft ein optisches Kabel mit einem Kernelement und segmentförmig rings um das Kernelement angeordneten, im Querschnitt etwa u-förmig gestalteten Teilelementen, von denen jedes nur eine jeweils zwei Seitenschenkel enthaltende Kammer zur Aufnahme eines Bändchenstapels aufweist, der jeweils aus einer Anzahl von mehrere Lichtwellenleiter umfassenden Bändchen zusammengesetzt ist, wobei die Teilelemente sich im Querschnitt nach außen hin erweitern.

Aus der DE-AS 29 28 678 ist es bekannt, ein optisches Kabel mit einseitig offenen Kammern vorzusehen, wobei die Kabelseele selbst aus mehreren Teilelementen zusammengesetzt ist. Hierzu sind etwa radial verlaufende Trennfugen vorgesehen. Gemäß einer besonderen Ausführungsform kann die Gestaltung der Kabelseele auch so vorgenommen werden, daß sich die Kammern nach innen öffnen und zwar in Richtung auf einen offenen Zentralraum, der im Bereich der Kabelseele als durchgehende Öffnung vorhanden ist. Die Lichtwellenleiter selbst sind bei dem bekannten Kabel als Einzel-Lichtwellenleiter angeordnet.

Aus der DE-OS 38 39 109 ist es bekannt, bei sogenannten Kammerkabel die Lichtwellenleiter in Form von Bändchenstapeln in den Kammern anzuordnen. Dabei enthält jeder Bändchenstapel mehrere Lichtwellenleiterbändchen, und die Kammer selbst ist etwa mit rechteckförmigen Querschnitte gestaltet und nach außen hin offen.

Der Erfindung liegt die Aufgabe zugrunde, ein optisches Kabel zu schaffen, das in einfacher Weise hergestellt werden kann und bei dem eine große Anzahl von Lichtwellenleitern in einer mechanisch stabilen Anordnung im Bereich der Kabelseele untergebracht werden kann. Gemäß der Erfindung wird diese Aufgabe bei einem optischen Kabel der eingangs genannten Art dadurch gelöst, daß die Kammern sich nach innen hin öffnen, daß die Teilelemente mit ihren Seitenschenkeln auf dem Kernelement aufsitzen, und daß die Teilelemente so ausgebildet sind, daß sie sich außen zu einem geschlossenen ringförmigen Gebilde zusammenfügen, wodurch sich durch die gegenseitige seitliche Stützung der Teilelemente ein stabiles Gesamtgebilde ergibt.

Bei der Erfindung sitzen somit die nach innen offenen Kammern einzeln auf dem Kernelement auf, so daß sich eine stabile, gut tragfähige Konstruktion ergibt. Außerdem ist gewährleistet, daß die aneinanderstoßenden Teilelemente einen platzsparenden und doch in sich stabilen Aufbau ergeben. Im Gegensatz zu Kammersystemen, die nach außen hin geöffnet sind, ist bei der Erfindung im Bereich der Basis, d.h. dort, wo die Kammerwandungen auf das Kernelement auftreffen keine Mindest-Wandstärke erforderlich. Werden dagegen nach außen offene Kammern durch Extrusion eines etwa speichenradförmigen Kammerelementes auf einen zu festen Kern hergestellt, dann ist für die Kammerwandung eine Mindeststärke auch im Bereich des Kammergrundes erforderlich, die aus Stabilitäts- und Herstellungsgründen nicht unterschritten werden kann.

Die Erfindung betrifft weiterhin ein Verfahren zur Herstellung eines optischen Kabels mit einem Kernelement und segmentförmig rings um das Kernelement angeordneten, im Querschnitt etwa u-förmig gestalteten Teilelementen, von denen jedes nur eine jeweils zwei Seitenschenkel enthaltende Kammer aufweist, in welche jeweils ein Bändchenstapel eingebracht wird, der jeweils aus einer Anzahl von mehrere Lichtwellenleiter umfassenden Bändchen zusammengesetzt ist, wobei die Teilelemente sich im Querschnitt nach außen hin erweitern, welches dadurch gekennzeichnet ist, daß die Kammern so eingebracht werden, daß sie sich nach innen hin öffnen, daß die Teilelemente mit ihren Seitenschenkeln auf das Kernelement aufgesetzt werden, und daß die Teilelemente so angeordnet werden, daß sie sich außen zu einem geschlossenen ringförmigen Gebilde zusammenfügen, wodurch sich durch die gegenseitige seitliche Stützung der Teilelemente ein stabiles Gesamtgebilde ergibt.

Weiterbildungen der Erfindung sind in Unteransprüchen wiedergegeben.

Die Erfindung und ihre Weiterbildungen werden nachfolgend anhand von Zeichnungen näher erläutert.

Es zeigen:
- Fig. 1: im Querschnitt ein erstes Ausführungsbeispiel eines optischen Kabels nach der Erfindung,
- Fig. 2: ein weiteres Ausführungsbeispiel eines erfindungsgemäßen optischen Kabels im Querschnitt,
- Fig. 3: ein optisches Kabel nach der Erfindung mit einer mehrlagigen Kabelseele,
- Fig. 4: in schematischer Darstellung ein erstes Ausführungsbeispiel für die Art der Herstellung eines erfindungsgemäß aufgebauten Kabels, und
- Fig. 5: ein weiteres Ausführungsbeispiel für die Art eines erfindungsgemäßen Kabels.

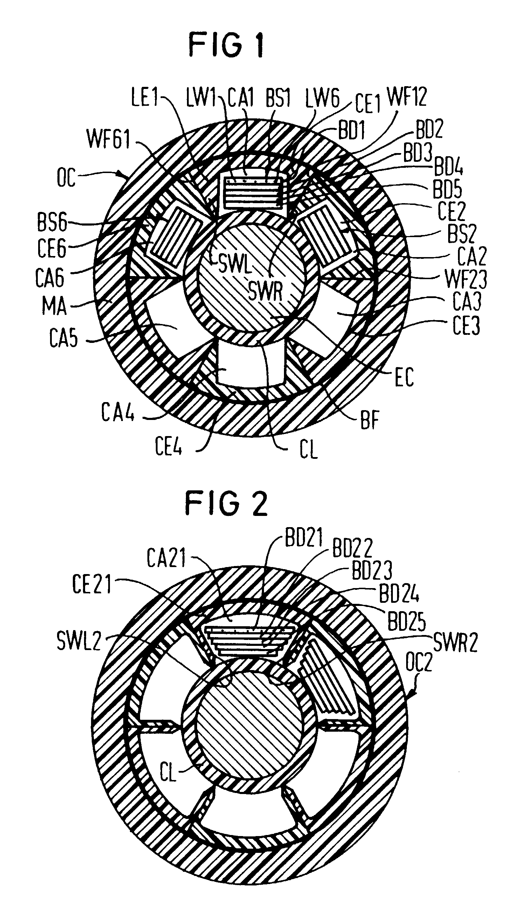

In Fig. 1 ist ein Kernelement EC vorgesehen, das zweckmäßig aus einem zugfesten Material (Stahl- oder z.B. glasfaserverstärkten Kunststoff) bestehen kann. Hier kann eine Kunststoff-Beschichtung CL vorgesehen sein. Auf diesem Kernelement EC sind in einer segmentförmigen Anordnung insgesamt sechs Kammerelemente (Teilelemente), CE1-CE6 derart angeordnet, daß ihre jeweiligen Kammern CA1-CA6 mit der Öffnung nach innen, d.h. in Richtung auf das Kernelement EC weisen. Die Kammern CA1-CA6 haben einen etwa rechteckförmigen Querschnitt und in jeder dieser Kammern ist ein Bändchenstapel BS1-BS6 untergebracht, der aus mehreren Bändchen besteht. Wie bei der Kammer CA1 näher angegeben, sind fünf derartige Bändchen BD1-BD5 vorhanden, die im wesentlichen in einer tangentialen Anordnung vorliegen, d.h. die Stapelung erfolgt in radialer Richtung. Jedes dieser Bändchen BD1-BD5 enthält eine Anzahl von Lichtwellenleitern, wobei im vorliegenden Beispiel, wie beim Bändchen BD1 gezeigt, sechs Lichtwellenleiter LW1-LW2 in eine das Bändchen bildende gemeinsame Umhüllung eingebracht sind. Die Einbringung der Bändchenstapel BS1-BS6 in die Kammern CA1-CA6 erfolgt zweckmäßig so, daß diese eine gewisse Beweglichkeit weiterhin beibehalten, ein Positionswechsel (Umklappen oder Umkippen) dagegen vermieden ist. Es genügt, wenn möglichst ringsum die Bändchenstapel ein schmaler Spalt vorgesehen wird. Dieser kann gegebenenfalls durch eine weiche Füllmasse geschlossen sein, die ebenfalls zur Lagerichtung beitragen kann. Es ist aber auch möglich, für die Bändchen BD1-BD5 eine Drehbarkeit/Umklappbarkeit innerhalb der Kammer CA1 vorzusehen, wobei auch eine Verdrehung mit wechselnden Richtungen (in der Art einer SZ-Verseilung) der Bändchen vorteilhaft sein kann.

Die jeweils einen u-förmigen Querschnitt aufweisenden Teilelemente CE1-CE6 sind bei ihren Seitenschenkeln (SWL und SWR bei CE1) so gestaltet, daß sich diese nach innen hin verjüngen. Im Bereich der Auflagefläche auf dem Kernelement EC ist die Wandstärke auf Werte zwischen 0 mm (d.h. Ausbildung als Spitze) und 0,5 mm reduziert. Diese Werte sind wesentlich kleiner als z.B. bei solchen Anordnungen, bei denen radial nach außen sich öffnende Kammern vorgesehen werden, weil Querschnittsübergänge nicht beachtet zu werden brauchen. Dort ist nämlich aus fertigungstechnischen und festigkeitsmäßigen Überlegungen heraus eine Verringerung der Wandstärke im Bereich des Kernelementes CE auf derart kleine Werte nicht möglich.

Der Zusammenhalt der auf das Kernelement EC aufgeseilten Teilelemente CE1-CE6 kann z.B. durch eine Bewicklung oder Bespinnung BF sichergestellt werden. Weiter außen ist ein (gegebenenfalls mehrschichtiger) Außenmantel MA aufgebracht, z.B. durch Extrudieren. Das so erhaltene optische Kabel OC zeichnet sich durch einen gedrängten Aufbau aus, bietet die Möglichkeit, eine hohe Zahl von Lichtwellenleitern für einen gegebenen Querschnitt unterzubringen und ermöglicht eine einfache und rationelle Herstellung.

Für den Fall, daß die Zahl der Lichtwellenleiter noch vergrößert werden soll, läßt sich eine Anordnung entsprechend Fig. 2 mit Vorteil anwenden. Dort ist die Kammer, z.B. des Teilelementes CE21 nicht mehr mit etwa rechteckförmigen Querschnitt ausgebildet, sondern ist ebenfalls segmentförmig gestaltet. Auf diese Weise entsteht eine sich nach außen verbreiternde Kammer und es besteht die Möglichkeit, Bändchenstapel BD21-BD25 vorzusehen, die den sich nach außen hin verbreitenden Raum der Kammer CA21 möglichst vollständig auffüllen. Dies bedeuted, daß die Bändchen von innen nach außen breiter werden und somit jeweils eine größere Anzahl von Lichtwellenleitern enthalten können. Die Packungsdichte der Lichtwellenleiter läßt sich somit bei gegebenen Kabelquerschnitt bzw. Querschnitt der Kabelseele erheblich erhöhen. Die Wandstärke der Seitenwände SWL2 und SWR2 des Teilelementes CE21 wird zweckmäßig so gewählt, daß sie von innen nach außen gleich bleibt. Es genügen Wandstärken im Bereich zwischen 0,5 mm und 1 mm für die Seitenwände SWL2 und SWR2. Dabei ist vorausgesetzt, daß das ganze Teilelement CE21 durch Extrusion, z.B. aus Polyethylen hergestellt wird.

Da alle Teilelemente untereinander den gleichen Querschnitt aufweisen genügt es, einen entsprechenden Extruderkopf vorzusehen, der als Grundbaustein ein derartiges Teilelement fortlaufend in größeren Lösungen herstellt. Durch Kombinieren von ausreichend vielen, z.B. sechs derartigen Teilelementen läßt sich dann der Aufbau einer Kabelseele bewältigen.

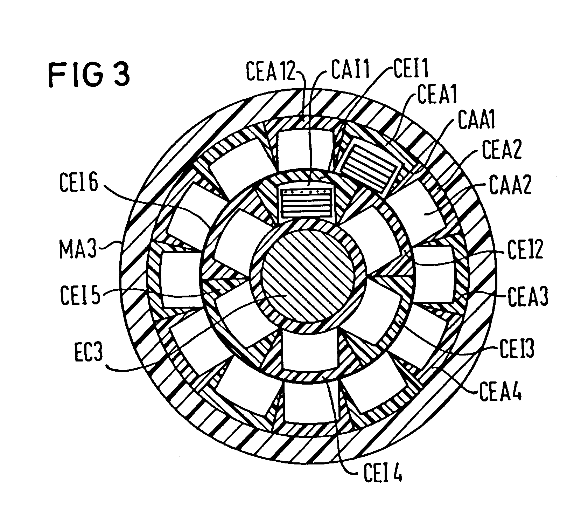

Da aus Festigkeitsgründen die radiale Ausdehnungen der Kammerelemente (z.B. CE1-CE6 in Fig. 1) nicht beliebig groß gemacht werden kann (ein derartiges Teilelement sollte zweckmäßig eine innere radiale Ausdehnung von etwa 2,5 mm bis 4 mm aufweisen) kann bei größeren Faserzahlen eine mehrlagige Ausgestaltung zweckmäßig sein, wie sie in Fig. 3 dargestellt ist. Bei dem dort dargestellten Kabel ist auf dem Kernelement EC3 zunächst eine innere Lage (ähnlich Fig. 1) von sechs segmentförmigen Teilelementen CEI1-CEI6 vorgesehen, deren Außenstruktur der Anordnung nach Fig. 1 entspricht. Es kann zweckmäßig sein, hier z.B. bevor die nächste Lage von segmentförmigen Teilelementen aufgebracht wird, eine Bewicklung oder Bespinnung vorzusehen, um die Lage der inneren Elemente CEI1-CEI6 zu sichern.

Weiter außen ist eine zweite Lage von segmentförmigen Teilelementen CEA1-CEA12 vorgesehen, wobei die Anordnung zweckmäßigerweise so erfolgt, daß jeweils Stege bzw. Trennwände der inneren Teilelemente CEI1-CEI6 und der äußeren Teilelemente CEA1-CEA12 in radialer Richtung gesehen nicht fluchtend zueinander angeordnet sind. Im vorliegenden Beispiel ist angenommen, daß die zweite Lage von Teilelementen CEA1-CEA12 etwa die gleiche radiale Ausdehnung hat wie die innere Lage und auch die Ausdehnung der Teilelemente CEA1-CEA12 etwa in Umfangsrichtung ähnlich denen der der inneren Lage ist. Wenn die innere Lage (CI1-CI6) und die äußere Lage (CA1-CA12) gegensinnig, d.h. im Gegenschlag aufgebracht werden, dann kreuzen sich die radialen Stege der beiden Lagen fortlaufend und es entsteht ein stabiles Gesamtgebilde mit hoher Flexibilität. Die Aufseilung einer oder beider Lagen kann auch SZ-förmig erfolgen.

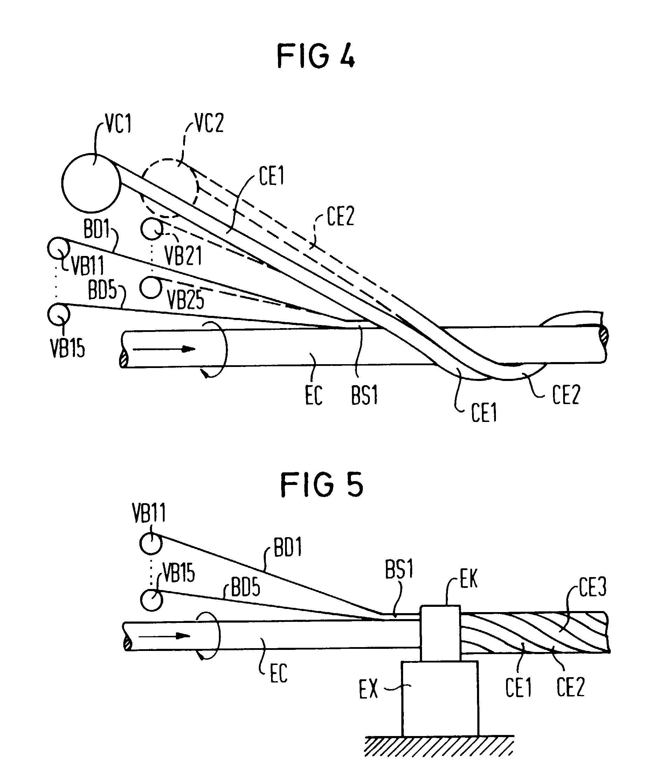

In Fig. 4 ist der Verfahrensablauf für die Herstellung eines optischen Kabels entsprechend Fig. 1 dargestellt. Dabei ist davon ausgegangen, daß die Teilelemente CE1, CE2, usw. vorgefertigt wurden und auf Vorratstrommeln VC1 bzw. VC2 usw. aufgewickelt vorliegen. Im vorliegenden Beispiel sind zur Vereinfachung der Darstellung nur die beiden Teilelemente CE1 und CE2 gezeichnet. Die Bändchen BD1-BD5 laufen von Vorratsspulen VB11-VB15 ab, während für die Bändchen des Stapels BS2 des Teilelementes CE2 Vorratsspulen VB21-VB25 vorgesehen sind. Alle dargestellten Vorratsspulen sind feststehend angeordnet, wobei davon ausgegangen ist, daß das zugfeste Zentralelement EC um seine Längsachse rotiert und dabei gleichzeitig von links nach rechts durchgezogen wird. Es ist aber auch möglich, das Kernelement EC feststehend auszubilden und dafür die Vorratsspulen in einem rotierenden Käfig unterzubringen.

Die einzelnen Vorratsspulen VB11-VB15 für die Bändchen BD1-BD5 sind so angeordnet, daß die unter leichter Zugspannung abgezogenen Bändchen BD1-BD5 kurz vor dem Auftreffen des Teilelementes CE1 bereits zu einem Stapel BS1 zusammengefaßt sind und gegebenenfalls in Berührung mit dem Kernelement EC kommen. Es ist aber auch möglich (z.B. durch entsprechende Führungsrohre oder Leiteinrichtungen) dafür zu sorgen, daß der Bändchenstapel BS1 zunächst in das Innere der Kammer CA1 des Teilelementes CE1 eingeschoben wird und zusammen mit diesem Teilelement dann auf das Kernelement EC aufgeseilt wird. In gleicher Weise wird mit den übrigen Teilelementen verfahren, so daß in einem Arbeitsgang sämtliche, eine geschlossene kreisförmige Ringfigur ergebenden Teilelemente am Ende des Aufseilvorgangs auf das Kernelement EC aufgebracht sind (im vorliegenden Beispiel sind zur Vereinfachung der Darstellung nur zwei Teilelemente, nämlich CE1 und CE2 gezeichnet).

Die Aufbringung der Teilelemente CE1-CE6 kann im Gleichschlagverfahren erfolgen; es ist aber auch möglich mit wechselnder Richtung der Verseilung (SZ-Verseilung) zu arbeiten, d.h. das Kernelement EC jeweils in bestimmten aufeinanderfolgenden Zeitabschnitten einer umgekehrten Rotation zu unterwerfen.

Bei der Darstellung nach Fig. 5 ist ebenfalls davon ausgegangen, daß das Kernelement EC rotiert, wobei im Gegensatz zur Anordnung nach Fig. 4 die Teilelemente CE1-CE6 nicht vorgefertigt sind, sondern erst im Rahmen des Aufbringens der Bändchenstapel ebenfalls mit hergestellt werden. Die Bändchen BD1-BD5, welche dem Bändchenstapel BS1 bilden, sind ebenfalls auf Vorratsspulen VB11-VB15 angeordnet und werden von diesen abgezogen. Der Bändchenstapel BS1 entsteht unmittelbar vor dem Einlaufen in den Extruderkopf EK eines Extruders EX. Die Auslässe des Extruderkopfes EK sind so gestaltet, daß entsprechend dem Beispiel von Fig. 1 sechs voneinander unabhängige Teilelemente CE1-CE6 gebildet werden, die jeweils praktisch brückenförmig über die zugehörigen Bändchenstapel BS1-BS6 nach Fig. 1 aufextrudiert werden, wobei eine Verbindung zu dem Kernelement EC nicht erforderlich ist. Wie bei Fig. 4 erwähnt, kann auch hier mit wechselnder Aufseilrichtung gearbeitet werden, d.h. beim Kern element EC kann die Drehrichtung periodisch geändert werden.

Ein besonderer Vorteil des erfindungsgemäßen Kabelaufbaus ist auch darin zu sehen, daß die Teilelemente, z.B. CE1-CE5 nach Fig. 1 sich außen zu einem geschlossenem ringförmigen Gebilde zusammenfügen, was insgesamt (hinsichtlich der tragenden Funktion) ähnlich einem durchgehenden Rohr zu bewerten ist. Die einzelnen Teilelemente bilden also quasi stützende Gewölbe und liefern dadurch - auch bei sehr kleinen Wandstärken der Trennwände - durch die gegenseitige seitliche Stützung ein stabiles Gesamtgebilde.

Eine etwa notwendige Uberlänge der Bändchenstapel BS1-BS6 nach Fig. 1 kann dadurch erreicht werden, daß diese beim Aufbringen auf das Kernelement EC schiebend eingebracht werden. Es ist aber auch möglich, das Kernelement EC im Bereich der Einlegestelle nach Fig. 4 oder 5 (d.h. dort wo die Bändchenstapel dem Kernelement EC zugeführt werden) unter einer axialen Vordehnung zu halten und diese nach Abschluß des Aufbringungsvorganges für die Bändchenstapel und für die Teilelemente wieder wegzunehmen. Die damit verbundene Schrumpfung des Zentralelementes EC bewirkt die relative Uberlänge der Bändchenstapel.

## Patentansprüche

1. Optisches Kabel mit mehrere Lichtwellenleiter umfassenden Bändchen (BD1 - BD5) einem Kernelement (EC) und segmentförmig rings um das Kernelement (EC) angeordneten, im Querschnitt etwa u-förmig gestalteten Teilelementen (CE1 - CE6), von denen jedes nur eine jeweils zwei Seitenschenkel (SWR, SWL) enthaltende Kammer (CA1 - CA6) zur Aufnahme eines Bändchenstapels (BS1 - BS6) aufweist, der jeweils aus einer Anzahl von Bändehen zusammengesetzt ist, wobei die Teilelemente (CE1 - CE6) sich im Querschnitt nach außen hin erweitern,
**dadurch gekennzeichnet,**
daß die Kammern (CA1 - CA5) sich nach innen hin öffnen, daß die Teilelemente (CA1 - CA6) mit ihren Seitenschenkeln(SWR, SWL) auf dem Kernelement (EC) aufsitzen, und daß die Teilelemente (CE1 - CE6) so ausgebildet sind, daß sie sich außen zu einem geschlossenen ringförmigen Gebilde zusammenfügen, wodurch sich durch die gegenseitige seitliche Stützung der Teilelemente (CE1 - CE6) ein stabiles Gesamtgebilde ergibt.

2. Optisches Kabel nach Anspruch 1,
**dadurch gekennzeichnet,**
daß sich die Kammern (CA21-CA26) nach außen hin verbreitern.

3. Optisches Kabel nach Anspruch 2,
**dadurch gekennzeichnet,**
daß in den sich nach außen hin verbreiternden Kammern Lichtwellenleiterbändchen (BD25-BD21) untergebracht sind, derart, daß die Breite der Bändchen und damit die Zahl der in ihnen enthaltenen Lichtwellenleiter von innen nach außen zunehmend größer wird.

4. Optisches Kabel nach einem der Ansprüche 2 oder 3,
**dadurch gekennzeichnet,**
daß die Wandstärke der Kammern in dem Bereich, in dem sie aneinanderstoßen von innen nach außen ungefähr gleichbleibt.

5. Optisches Kabel nach einem der Ansprüche 1 bis 3,
**dadurch gekennzeichnet,**
daß die Wandstärke der Kammern sich nach innen hin verjüngt.

6. Optisches Kabel nach einem der vorhergehenden Ansprüche,
**dadurch gekennzeichnet,**
daß mindestens eine weitere Lage sich nach innen hin öffnender Teilelemente (CEA1 - CEA12) auf einer inneren Lage (CEI1 - CEI6) von Teilelementen untergebracht ist.

7. Verfahren zur Herstellung eines optischen Kabels mit einem Kernelement (EC) und segmentförmig rings um das Kernelement (EC) angeordneten, im Querschnitt etwa u-förmig gestalteten Teilelementen (CE1 - CE6), von denen jedes nur eine jeweils zwei Seitenschenkel (SWR, SWL) enthaltende Kammer (CA1 - CA6) aufweist, in welche jeweils ein Bändchenstapel (BS1 - BS6) eingebracht wird, der jeweils aus einer Anzahl von mehrere Lichtwellenleiter umfassenden Bändchen (BD1 - BD5) zusammengesetzt ist, wobei die Teilelemente (CE1 - CE6) sich im Querschnitt nach außen hin erweitern,
**dadurch gekennzeichnet,**
daß die Kammern (CA1 - CA5) so eingebracht werden, daß sie sich nach innen hin öffnen, daß die Teilelemente (CA1 - CA6) mit ihren Seitenschenkeln (SWR, SWL) auf das Kernelement (EC) aufgesetzt werden, und daß die Teilelemente (CE1 - CE6) so angeordnet werden, daß sie sich außen zu einem geschlossenen ringförmigen Gebilde zusammenfügen, wodurch sich durch die gegenseitige seitliche Stützung der Teilelemente (CE1 - CE6) ein stabiles Gesamtgebilde ergibt.

8. Verfahren nach Anspruch 7,
**dadurch gekennzeichnet,**
daß die Bändchenstapel (BS1-BS6) in den Teilelementen (CE1-CE6) nach ihrem Einbringen lagegesichert gehalten werden.

9. Verfahren nach Anspruch 8,
**dadurch gekennzeichnet**,
daß die Bändchenstapel (BS1-BS6) durch Zugabe einer Füllmasse lagegesichert gehalten werden.

10. Verfahren nach den Ansprüchen 7 bis 9,
**dadurch gekennzeichnet,**
daß eine Aufseilung, vorzugsweise mit wechselnder Schlagrichtung vorgenommen wird.

11. Verfahren nach den Ansprüchen 7 bis 10,
**dadurch gekennzeichnet,**
daß die Teilelemente (CE1-CE6) vorgefertigt und anschließend von Vorratstrommeln (VC1, VC2) abgezogen und zusammen mit den Bändchenstapeln auf das Kernelement (EC) aufgeseilt werden.

12. Verfahren nach den Ansprüchen 7 bis 10,
**dadurch gekennzeichnet,**
daß ein einteiliger Zentralkörper (ZK) extrudiert und die Bändchenstapel durch den Extruderkopf (EK) hindurchgezogen werden.

## Claims

1. Optical cable having a core element (EC) and sub-elements (CE1-CE6) of approximately u-shaped cross-sectional configuration arranged in a segment shape around the core element (EC), each said sub-element having only one chamber (CA1-CA6), containing in each case two lateral legs (SWR, SWL), to accommodate a ribbon stack (BS1-BS6), which in each case is composed of a number of ribbons (BD1-BD5) comprising a plurality of optical waveguides, the sub-elements (CE1-CE6) widening in cross-section towards the outside, characterized in that the chambers (CA1-CA5) open towards the inside, in that the sub-elements (CA1-CA6) are seated with their lateral legs (SWR, SWL) on the core element (EC) and in that the sub-elements (CE1-CE6) are designed in such a way that they join together on the outside to form a closed annular structure, which results in a stable overall structure as a result of the mutual lateral support of the sub-elements (CE1-CE6).

2. Optical cable according to Claim 1, characterized in that the chambers (CA21-CA26) broaden towards the outside.

3. Optical cable according to Claim 2, characterized in that, in the outwardly broadening chambers, optical waveguide ribbons (BD25-BD21) are accommodated in such a way that the width of the ribbons and hence the number of optical waveguides contained therein becomes increasingly larger from the inside to the outside.

4. Optical cable according to one of Claims 2 and 3, characterized in that the wall thickness of the chambers, in the region in which they abut one another, remains approximately constant from the inside to the outside.

5. Optical cable according to one of Claims 1 to 3, characterized in that the wall thickness of the chambers tapers towards the inside.

6. Optical cable according to one of the preceding claims, characterized in that at least one further layer of inwardly open sub-elements (CEA1-CEAI2) is accommodated on an inner layer (CE11-CE16) of sub-elements.

7. Method for the production of an optical cable having a core element (EC) and sub-elements (CE1-CE6) of approximately u-shaped cross-sectional configuration arranged in a segment shape around the core element (EC), each said sub-element having only one chamber (CA1-CA6), containing in each case two lateral legs (SWR, SWL), into which in each case a ribbon stack (BS1-BS6) is introduced, which in each case is composed of a number of ribbons (BD1-BD5) comprising a plurality of optical waveguides, the sub-elements (CE1-CE6) widening in cross-section towards the outside, characterized in that the chambers (CA1-CA5) are introduced in such a way that they open towards the inside, in that the sub-elements (CA1-CA6) are placed with their lateral legs (SWR, SWL) on the core element (EC), and in that the sub-elements (CE1-CE6) are arranged in such a way that they join together on the outside to form a closed annular structure, which results in a stable overall structure as a result of the mutual lateral support of the sub-elements (CE1-CE6).

8. Method according to Claim 7, characterized in that the ribbon stacks (BS1-BS6) in the sub-elements (CE1-CE6) are held in a positionally secure manner after their introduction.

9. Method according to Claim 8, characterized in that the ribbon stacks (BS1-BS6) are held in a positionally secure manner by adding a filling compound.

10. Method according to Claims 7 to 9, characterized in that a stranding is undertaken, preferably using alternating direction of lay.

11. Method according to Claims 7 to 10, characterized in that the sub-elements (CE1-CE6) are prefabricated and subsequently drawn off from supply drums (VC1, VC2) and are stranded onto the core element (EC) together with the ribbon stacks.

12. Method according to Claims 7 to 10, characterized in that a one-piece central body (ZK) is extruded and the ribbon stacks are drawn through the extruder head (EK).

## Revendications

1. Câble optique comprenant des rubans (BD1 à BD5) comprenant plusieurs fibres optiques, un élément formant noyau (EC) et des éléments partiels (CE1 à CE6), à section transversale à peu près en forme de U et disposés en forme de segments tout autour de l'élément formant noyau (EC), chacun d'eux ne comportant qu'une alvéole (CA1 à CA6), ayant deux branches latérales (SWR, SWL), pour recevoir un empilement de rubans (BS1 à BS6), qui se compose d'un certain nombre de rubans et dans lequel les éléments partiels (CE1 à CE6) ont une section transversale qui va en s'élargissant vers l'extérieur,
caractérisé par le fait que
les alvéoles (CA1 à CA5) s'ouvrent vers l'intérieur, que les éléments partiels (CA1 à CA6) reposent par leurs branches latérales (SWR, SWL) sur l'élément formant noyau (EC), et que les éléments partiels (CE1 à CE6) sont conçus de telle manière qu'ils se rejoignent vers l'extérieur en une structure annulaire fermée, si bien que l'on obtient, par le soutien latéral mutuel des éléments partiels (CE1 à CE6), une structure globale stable.

2. Câble optique selon la revendication 1,
caractérisé par le fait que
les alvéoles (CA21 à CA26) vont en s'élargissant en direction de l'extérieur.

3. Câble optique selon la revendication 2,
caractérisé par le fait que
des rubans de fibres optiques (BD25 à BD21) sont logés dans les alvéoles, allant en s'élargissant en direction de l'extérieur, de telle manière que la largeur des rubans, et par conséquent le nombre des fibres optiques qui y sont contenues, aille en augmentant de l'intérieur vers l'extérieur.

4. Câble optique selon l'une des revendications 2 ou 3,
caractérisé par le fait que
l'épaisseur de paroi des alvéoles, dans la zone où ils sont contigus, reste à peu près identique de l'intérieur vers l'extérieur.

5. Câble optique selon l'une des revendications 1 à 3,
caractérisé par le fait que
l'épaisseur de paroi des alvéoles s'amincit en direction de l'intérieur.

6. Câble optique selon l'une des revendications précédentes,
caractérisé par le fait que
au moins une couche supplémentaire d'éléments partiels (CEA1 à CEA12), s'ouvrant en direction de l'intérieur, est appliquée sur une couche intérieure (CEI1 à CEI6) d'éléments partiels.

7. Procédé de fabrication d'un câble optique comprenant un élément formant noyau (EC) et des éléments partiels (CE1 à CE6), à section transversale à peu prés en forme de U et disposés en forme de segments tout autour de l'élément formant noyau (EC), chacun d'eux ne comportant qu'un alvéole (CA1 à CA6), qui a deux branches latérales (SWR, SWL), et dans lequel on met place un empilement de rubans (BS1 à BS6), qui se compose d'un certain nombre de rubans (BD1 à BD5) comprenant plusieurs fibres optiques, et dans lequel les éléments partiels (CE1 à CE6) ont une section transversale qui va en s'élargissant vers l'extérieur,
caractérisé par le fait que
on met en place les alvéoles (CA1 à CA5) de telle manière qu'ils s'ouvrent en direction de l'intérieur, que les éléments partiels (CA1 à CA6) soient posés par leurs branches latérales (SWR, SWL) sur l'élément formant noyau (EC), et que les éléments partiels (CE1 à CE6) sont disposés de telle manière qu'ils se rejoignent vers l'extérieur en une structure annulaire fermée, si bien que l'on obtient, par le soutien latéral mutuel des éléments partiels (CE1 à CE6), une structure globale stable.

8. Procédé selon la revendication 7,
caractérisé par le fait que
on maintient en position les empilements de rubans (BS1 à BS6) dans les éléments partiels (CE1 à CE6) après leur mise en place .

9. Procédé selon la revendication 8,
caractérisé par le fait que
on maintient en position les empilements de rubans (BS1 à BS6) par l'addition d'une matière de remplissage.

10. Procédé selon les revendications 7 à 9,
caractérisé par le fait que
l'on procède à un enroulement, de préférence avec un sens de commettage alterné.

11. Procédé selon les revendications 7 à 10,
caractérisé par le fait que
l'on préfabrique les éléments partiels (CE1 à CE6), puis on les dévide à partir de rouleaux débiteurs (VC1, VC2) et on les enroule en même temps que les empilements de rubans sur l'élément formant noyau (EC).

12. Procédé selon les revendications 7 à 10,
caractérisé par le fait que
l'on extrude un corps central (ZK) d'une seule pièce et que l'on tire les empilements de rubans au travers de la tête d'extrusion (EK).
